# EUROPEAN PATENT APPLICATION

(11) **EP 4 311 077 A1**
(43) Date of publication of application: **24.01.2024**
(21) Application number: 23167170.2
(22) Date of filing: 06.04.2023
(51) Int. Cl.: H02J 50/00, H02J 50/80, G06F 1/28, G06F 1/3209, G06F 1/3212, G06F 1/3228, G06F 1/329, H02J 50/40

(54) **NETWORKED PROCESSING DEVICES AND METHOD OF OPERATION**

(30) Priority: 07.07.2022 SE 2250862
(71) Applicant: Sony Group Corporation, Tokyo 108-0075 (JP)
(72) Inventor: ISBERG, Anders, Basingstoke, RG22 4SB (GB); EXNER, Peter, Basingstoke, RG22 4SB (GB); BERGKVIST, Hannes, Basingstoke, RG22 4SB (GB)
(74) Representative: Neij & Lindberg AB

(57) **Abstract**

A system comprises a plurality of network-connected processing devices, for example IoT devices. The respective processing device comprises processor circuitry configured to perform a processing task, a transceiver for communication with other processing devices in the system, and an energy harvesting device configured to provide energy for the processor circuitry and the transceiver. To improve utilization of harvested energy within the system by efficient off-loading of processing tasks between the processing devices, the processor circuitry is further configured to estimate (401) surplus energy in the processing device for an upcoming time period, and the transceiver is configured to transmit (403) forecast data representing the surplus energy to the other processing devices in the system.

## Description

### Technical Field

The present disclosure relates generally to the field of IoT (Internet of Things) systems and, more particularly, to techniques for improving operability of a system comprising a plurality of processing devices which are arranged for communication in a network.

### Background

IoT systems are being installed in great numbers and for a variety of applications, such as building and home automation, agriculture, manufacturing, energy management, environmental monitoring, remote healthcare, elder care, etc. The number of IoT devices worldwide is forecast to almost triple from 11.3 billion in 2021 to more than 29 billion IoT devices in 2030.

An IoT system comprises a plurality of processing devices (IoT devices) that are connected to a network and are individually addressable. Each loT device is configured to perform one or more dedicated processing tasks and report the result to other IoT devices in the system or to a back-end device. An IoT device typically includes one or more sensors that provide input data for the processing task(s). The IoT devices are often self-powered, by a battery, and configured to be highly energy-efficient.

One concern when operating IoT systems is how to ensure consistent operability of self-powered IoT devices. Eventually, the battery of an IoT device will run dry. The task of changing batteries within an IoT system is labor-intensive and may be challenging, for example if the number of IoT device is large, or if they are difficult of access. Further, different IoT devices in a system are likely to need battery replacement at different time points.

### Summary

It is an objective to at least partly overcome one or more limitations of the prior art.

Another objective is to provide a technique of enabling an increased operative life of self-powered processing devices which are arranged for communication in a network.

A further objective is to restrict overhead communication in the network.

The proposed solution is defined by the terms of the independent claims, while further advantageous embodiments are set out in the dependent claims and in the detailed description.

By the proposed solution, processing devices in a system of processing devices are provided with energy-harvesting capability. Further, the proposed solution provides a mechanism for efficient off-loading of tasks between the thus self-powered processing devices in the system. The basis for this mechanism is that the respective processing device transmits forecast data within the system, for receipt by other processing devices. The forecast data is representative of an estimated surplus energy in the processing device for an upcoming time period and may thus account for the harvested energy in the upcoming time period. The distribution of forecast data within the system enables any processing device that detects that it will lack sufficient energy to perform an upcoming task, to off-load this task to another processing device based on forecast data from different processing devices in the system. The proposed solution improves the usage of harvested energy within the system and reduces or obviates the need for battery replacement in the processing devices, and may even obviate the need for a battery in the processing device. The proposed solution is particularly suitable when the deployment of the processing devices results in significantly varying ability to harvest energy between different processing devices and/or over time for the individual processing device. By configuring the respective processing device to automatically transmit the forecast data to other processing devices in the system, it is possible to achieve the off-loading without significantly increasing the overhead communication within the network. Embodiments of the proposed solution may serve to further reduce the overhead communication.

### Brief Description of Drawings

FIG. 1 is a schematic overview of a system of networked processing devices.
FIG. 2A is a block diagram of an example processing device in the system of FIG. 1, and FIG. 2B is a block diagram of example processor circuitry in a processing device.
FIG. 3 is a sequence diagram of operations and data communication performed by processing devices in a system in accordance with an example.
FIGS 4A-4E are flow charts of operations performed by a respective processing device for off-loading in a system in accordance with embodiments.
FIG. 5A is a plot of a predicted time profile of surplus energy in a processing device, and FIG. 5B illustrates a parametric curve fitted to the predicted time profile.
FIG. 6 is a plot of predicted time profiles of surplus energy in a processing device at two time points.
FIGS 7A-7B are graphic illustrations of a process of off-loading in accordance with embodiments.

### Detailed Description of Example Embodiments

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Also, it will be understood that, where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more", even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments.

As used herein, the terms "multiple", "plural" and "plurality" are intended to imply provision of two or more elements. The term "and/or" includes any and all combinations of one or more of the associated listed elements.

It will furthermore be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing the scope of the present disclosure.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

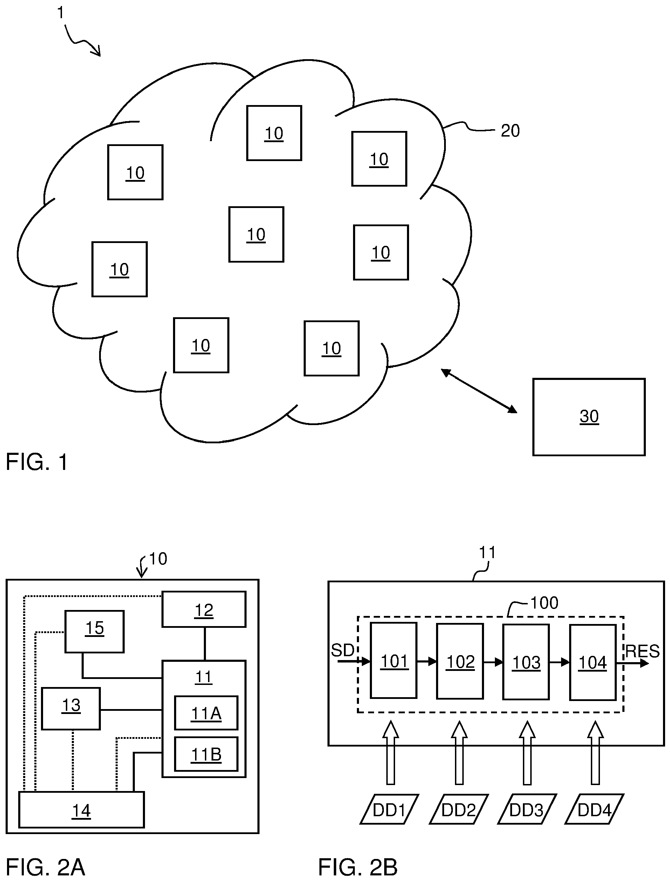

FIG. 1 illustrates a system 1 of processing devices 10, which are connected for wired or wireless communication in a communication network 20. Each processing device 10 is configured to perform one or more dedicated processing tasks ("tasks"). A task that is assigned to a processing device 10 is also denoted "default task", in contrast to off-loaded tasks that are performed on behalf of other processing devices in the system 1. The processing devices 10 may be of any type and used for any purpose. In the following description, it is assumed that the processing devices 10 are IoT devices. For brevity, the processing devices 10 are also referred to as "nodes". The nodes 10 may, for example, be configured to perform edge computing, for example edge AI. In some embodiments, the communication network 20 is configured as a personal area network (PAN) or a local area network (LAN). The network 20 may have any suitable topology, such as point-to-point, daisy chain, bus, star, ring or mesh, or any combination thereof. In some embodiments, the network 20 is an ad hoc network. The communication in the network 20 may be based on any wired or wireless communication protocol, including wireless short-range communication, for example by Bluetooth, BLE, WiFi, LR-WPAN, UWB, ZigBee, Z-Wave, ANT, ANT+, 6LoWPAN, WirelessHART, ISA100, etc.

In the example of FIG. 1, the communication network 20 is connected to a computer device 30, for example a back-end computer or server, which may be located in the cloud. The connection between the network 20 and the computer device 30 may be established by one or more of the nodes 10 in the network 20. Data communication between the network 20 and the computer device 30 may be performed by wire or wirelessly, and by use of any suitable communication protocol(s). The computer device 30 may be configured to obtain the result of the task(s) performed by the respective node 10 and/or provide data for the control or configuration of the respective node 10.

As noted in the Background section, battery drain is of great concern in systems comprising IoT devices. To mitigate the risk for battery drain, the nodes 10 in FIG. 1 comprise a circuitry for energy harvesting (EH), which is configured to capture ambient energy. The ambient energy may include one of more of wind energy, solar energy, thermal energy, kinetic energy, or radio waves. For example, a node 10 may comprise a micro wind turbine for capturing wind energy, a photovoltaic cell for capturing solar energy or energy from artificial lighting, a thermoelectric or pyroelectric generator for capturing thermal energy, a piezoelectric, electrostatic or induction-based element for capturing kinetic energy (for example, vibrations), or an antenna element for capturing radio wave energy emitted from electronic devices or natural sources, or any combination thereof. Depending on implementation, the harvested energy may be accumulated and stored locally within the node 10 and used by the node 10 as needed, or it may be used as it is harvested without any intermediate storage.

The mere implementation of energy harvesting in an IoT device may not be sufficient to ensure operability of the IoT device over time, even if the harvested energy is stored in the IoT device. Typically, the availability of harvested energy will vary over time and an individual IoT device may lack sufficient energy resources to timely perform its task(s). Consider a system with three IoT devices that are located inside a building to perform similar tasks at approximately the same time. The IoT devices are powered by solar panels. A first IoT device is located on the west side of the building close to a window, a second IoT device is located on the east side of the building close to a window, and a third IoT device is located in a room without any windows. In the Northern Hemisphere, the first IoT device is likely to harvest solar energy before noon, and the second loT device is likely to harvest solar energy in the afternoon. The third loT device is only capable of harvesting energy from artificial lighting (indoor lighting) and the available energy for harvesting will be limited. In such a setup, it would be desirable to transfer harvested energy from the first IoT device to the second and third IoT devices before noon, and to transfer harvested energy from the second IoT device to the first and third IoT devices in the afternoon.

Such distribution of energy may be achieved by connecting the IoT devices to an electrical grid, for example a so-called smart grid. However, this will significantly increase the complexity of the system and make installation of the system more complicated. Further, at present, there are no commercially available techniques for sharing energy wirelessly among energy-consuming devices.

Instead of distributing surplus energy between the nodes 10 in the system 1 in FIG. 1, it is therefore proposed to temporarily distribute tasks within the system 1, from nodes expecting a deficit of energy to nodes expecting a surplus of energy. By the present disclosure, it is proposed to configure each node 10 to forecast the available amount of surplus energy for an upcoming time period and expose the forecasted amount to the other nodes in the system 1. In this context, "surplus energy" refers to energy that is deemed not to be used by the node itself during the upcoming time period. Thus, surplus energy is equivalent to excess energy or redundant energy. The exposure of forecasted amounts of surplus energy by nodes 10 in the system 1 allows any node that identifies an energy deficit in relation to an upcoming task, to off-load the upcoming task to another node that will have a sufficient amount of surplus energy according to its exposed forecast. This technique of off-loading based on exposed forecasts provides an efficient and simple way of improving the use of the energy in a system, in which the energy is distributed over nodes in the system and at least partly originates from energy harvesting by the respective node. The technique does not require centralized control of the off-loading and is thus particularly suited for IoT devices.

FIG. 2A is a block diagram of an example node 10, which is representative of any node in the system 1 in FIG. 1. The node 10 comprises a control unit 11 for controlling the operation of the node 10. The control unit 11 also performs the processing task(s) of the node 10. The control unit 11 is implemented by processor circuitry comprising one or more processors 11A and computer memory 11B. The processor(s) 11A may, for example, include one or more of a CPU ("Central Processing Unit"), a DSP ("Digital Signal Processor"), a microprocessor, a microcontroller, an ASIC ("Application-Specific Integrated Circuit"), a combination of discrete analog and/or digital components, or some other programmable logical device, such as an FPGA ("Field Programmable Gate Array"). The memory 11B may include volatile and/or non-volatile memory such as read only memory (ROM), random access memory (RAM) or flash memory. In some embodiments, the control unit 11 is implemented by a control program which is stored in the memory 11B. The control program is executed by the processor(s) 11B to perform any functionality of the node 10 as described herein. The control program may be supplied to the node 10 on a computer-readable medium, which may be a tangible (non-transitory) product (for example, magnetic medium, optical disk, read-only memory, flash memory, etc.) or a propagating signal.

The node 10 further comprises a transceiver 12, which is configured for wired or wireless communication with other nodes 10 in the system 1, and optionally for wired or wireless communication with the computer device 30, as discussed hereinabove.

The node 10 further comprises an energy harvesting (EH) device 13, which may be configured as discussed hereinabove.

In the illustrated example, the node 10 further comprises an energy storage device 14, for example a battery, capacitor or super-capacitor, and a sensor arrangement 15, which is configured to measure one or more properties at the location of the node 10. Non-limiting examples of such properties include moisture, humidity, temperature, light exposure, nutrient, pH, electrical conductivity, vibrations, strain, pressure, air pollution, flow rate, concentration, presence of humans or animals, movement of external object(s), etc. Sensor data generated by the sensor arrangement 15 may be provided as (part of) input data for the default task(s) of the node 10. In some nodes, the sensor arrangement 15 may be omitted, for example when the node 10 has a default task that is solely performed on input data supplied by other nodes 10 and/or by the computer device 30.

In the example of FIG. 2A, the control unit 11 is connected by signal lines (solid) to provide control signals to the operative components 12-15 of the node 10. The EH device 13 is connected by a power line (dotted) to provide harvested energy for storage in the energy storage device 14, which is in turn connected by power lines (dotted) to supply energy to the control unit 11, the transceiver 12 and the sensor arrangement 15. The distribution of energy in FIG. 2A is merely given as an example. For example, as noted above, the energy storage device 14 may be omitted.

FIG. 2B is a block diagram of a control unit 11 comprising a processing part 100 for performing a default task. The processing part 100 operates on sensor data, SD, to produce result data, RES. In the illustrated example, the processing part 100 is modularized and includes processing modules 101-104 arranged in sequence to process SD into RES. In some embodiments, one or more of the modules 101-104 is configured by definition data. For example, the definition data for a module may define one or more parameter values to be used in the processing by the module. In FIG. 2B, each module 101-104 is assigned definition data DD1-DD4, which may differ between modules. The definition data may be provided to the node 10 in a configuration process, for example as part of manufacture or maintenance before installation of the node 10 in the system 1. Alternatively, the configuration process may be performed remotely by the computer device 30 or locally by an operator. In another alternative, the node 10 is adaptive and configured to update the definition data while the node 10 operates to perform the task.

In some embodiments, the processing part 100 is a machine learning-based model, for example implemented as a neural network (NN) model. In such embodiments, the modules 101-104 may correspond to different layers of the NN model, which has been trained to perform a task. In the training, control parameters of the NN model are adjusted to achieve a desired output. These control parameters comprise weights and/or biases for neurons in the NN model, as is well-known in the art. The definition data DD1-DD4 may include values of the control parameters for the layer(s) in the respective module 101-104. The NN model may be of any type, including but not limited to Perceptron, MLP (Multi-Layer Perceptron), CNN (Convolutional Neural Network), DNN (Deep Neural Network), RNN (Recurrent Neural Network), GAN (Generative Adversarial Network), etc.

It may be noted that the term "processing task" or "task" as used herein may refer to an overall task that is performed by a node, or a task that is performed as part of such an overall task ("sub-task"). In the example of FIG. 2B, a task performed by a node may refer to the processing of SD into RES by the processing part 100, or to the processing performed by any one of the modules 101-104. Thus, when the present disclosure refers to an "off-loaded processing task", this may be an overall task of a node or a sub-task in the overall task.

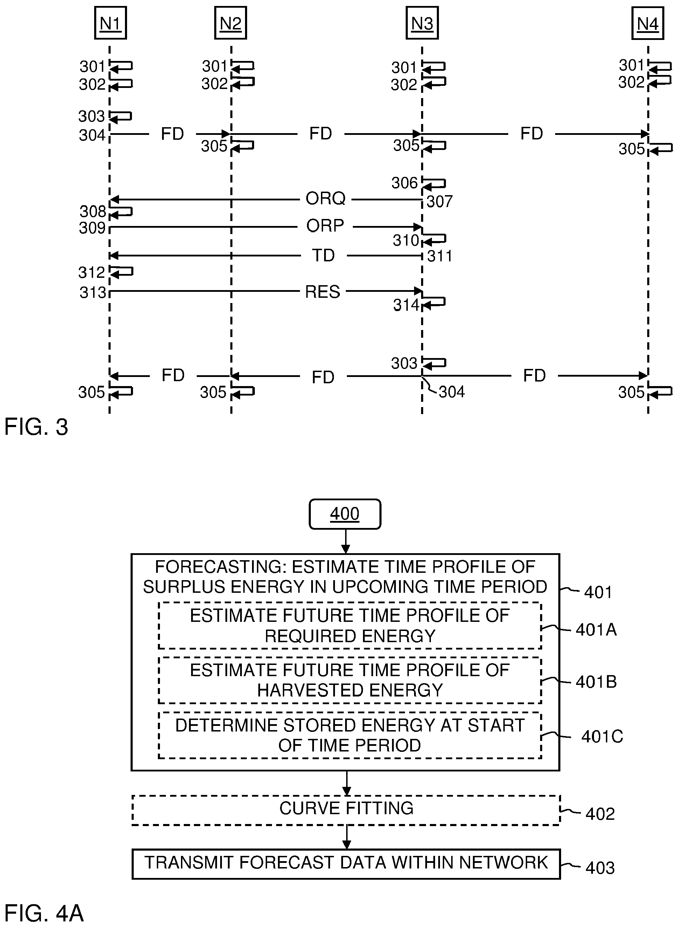

FIG. 3 is a sequence diagram of operations performed by four nodes N1-N4 in a system in accordance with an example. FIG. 3 is provided to given a system-wide understanding of the technique of off-loading based on exposed forecasts of surplus energy. It is to be noted that FIG. 3 is merely given as a non-limiting example. Further details and examples of the operations performed by the respective node are presented below with reference to FIGS 4A-4E.

In step 301, the respective node N1-N4 joins the network 20 (FIG. 1). Step 301 need not be performed concurrently by the different nodes, as shown, but may be performed by the respective node at any suitable time. In step 302, the respective node N1-N4 estimates its surplus energy for an upcoming time period, also denoted "forecasting time period" or FTP herein. Again, step 302 need not be performed concurrently by the different nodes. In step 303, N1 prepares forecast data, FD, which indicates the forecasted surplus energy in N1. In step 304, N1 distributes FD to the other nodes N2-N4. In the illustrated example, the network 20 is a mesh network, and N1 transmits FD by multicast. In the mesh network, N2 receives FD and relays FD to N3, which receives FD and relays FD to N4. In step 305, each of N2-N4 stores FD of N1 in internal memory (cf. 11B in FIG. 2A). Although not shown in FIG. 3, any one of N2-N4 may also perform steps 303-304.

At a subsequent time point, in step 306, N3 detects an energy deficit in relation to an upcoming processing task to be performed by N3. This causes N3, as part of step 306, to evaluate the stored FD of other nodes in view of the detected energy deficit and select one of the other nodes, here N1. In step 307, N3 transmits a request for off-loading, ORQ, by unicast to N1. The request ORQ may indicate the energy deficit of N3. In step 308, after receiving ORQ, N1 evaluates ORQ and decides if to accept or reject the request. For example, N1 may perform step 302 to re-estimate its surplus energy for a new FTP relative to the current time and evaluate if the surplus energy is sufficient. In step 309, N1 transmits a reply, ORP, with an acceptance of ORQ by unicast to N3. In step 310, after receiving ORP, N3 prepares task data, TD, which allows N1 to perform the off-loaded task. For example, TD may include input data and/or definition data for the off-loaded task. In step 311, N3 transmits TD by unicast to N1. In step 312, after receiving TD, N1 performs the off-loaded task, for example by operating on the input data in TD and/or by configuring the processing part 100 or a module thereof (cf. FIG. 2B) in accordance with the definition data in TD. In step 313, N1 transmits the result of the off-loaded task, here represented as RES, by unicast to N3. In step 314, after receiving RES, N3 stores RES in internal memory.

Steps 303-304 may be performed by any of the nodes N1-N4 at any time. For example, at a subsequent time point in FIG. 3, shown at the bottom of the sequence diagram, N3 performs steps 303-304 to transmit FD to nodes N1, N2, and N4, which thereby perform step 305 to store FD from N3 in their respective internal memory. Further, although not shown in FIG. 3, any node may perform steps 303-304 at consecutive time points, for example periodically or whenever there is a significant change in the forecasted surplus energy of the node.

The processes in FIG. 3 is an implementation of a more general method of collectively operating networked nodes 10, which are configured to perform a respective task and comprises a respective energy harvesting device 13. In the method, the respective node is caused to estimate (forecast) its surplus energy for an FTP (cf. step 302) and to transmit, within the network, outgoing forecast data representing the estimated (forecasted) surplus energy (cf. steps 303-304). Further, the respective node is caused to receive incoming forecast data from other nodes in the system and store the incoming forecast data in a memory in association with the respective other node (cf. step 305). Here, the incoming forecast data represents estimated (forecasted) surplus energy in the other nodes within a respective FTP. Still further, the respective node is caused, upon detection of a shortage of energy to perform the task, to evaluate the incoming forecast data stored in the memory for selection of a selected node among the other nodes (cf. step 306) and to transmit, for the selected node, an outgoing request for off-loading of the task (cf. step 307).

FIG. 4A is flow chart of an example distribution procedure 400, which may be performed by the respective node 10 in the system 1 of FIG. 1. The distribution procedure 400 ensures that other nodes are informed about the forecasted surplus energy in the respective node. The distribution procedure 400 corresponds to steps 302-304 in FIG. 3. Optional steps are indicated by dashed lines.

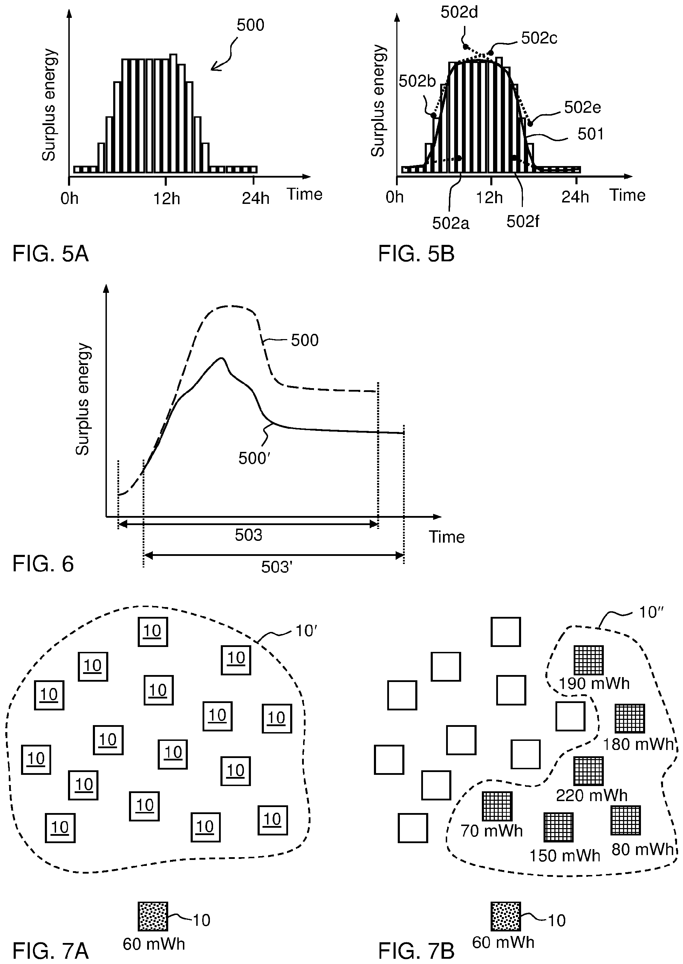

In the example of FIG. 4A, step 401 comprises estimating a time profile of surplus energy for the node in an FTP. As used herein, "time profile of surplus energy", abbreviated "surplus profile", is a collection of data values that represent the change in surplus energy over time. Typically, the surplus profile is obtained as a time sequence of energy values. A time profile comprises at least two energy values, and typically at least 5-10 energy values. An example of a surplus profile 500 is given in FIG. 5A, in which the FTP spans 24 hours from the current time point (0h). Each bar in FIG. 5A represents an estimated value of surplus energy for one hour in the FTP.

In step 403, forecast data (FD) that represents the surplus profile is transmitted from the node for distribution within the network. By step 403, FD is distributed to at least a subset of the other nodes in the system, and possibly to all of the other nodes. The distribution of FD in step 403 is performed in dependence of the type of network 20. For example, FD may be broadcast from the node for receipt by all other nodes within range, be transmitted by multicast in a mesh network, or be transmitted from the node to the computer device 30, which is thereby caused to distribute FD to all or a subset of the other nodes, for example by pushing FD to the respective node.

In a variant, a single aggregated value of the surplus energy for the FTP is estimated in step 401 and included in FD in step 403 instead of a surplus profile. Such a variant may be simpler to implement since it is less sensitive to estimation errors. However, the use of a surplus profile provides the technical advantage of allowing the other nodes to more precisely schedule off-loading of tasks. Further, the use of a surplus profile reduces the need for frequent generation and transmission of FD within the network and thereby both reduces the power consumption of the individual node and decreases data traffic (overhead communication) in the network. An aggregated value is typically given for a much shorter FTP than a surplus profile and thereby needs to be reestimated and transmitted more frequently than a surplus profile. With reference to FIG. 5A, it is realized that a single aggregated value for the next 24 hours may not be sufficient for other nodes to be able to timely off-load tasks when they expect to run out of energy. Instead, the single aggregated value may need to be updated and transmitted every hour to provide information that is comparable to the surplus profile 500 in FIG. 5A.

The extent of FTP in step 401 may be predefined for each node. In some embodiments, the FTP is the same in all nodes. In a variant, FTP may differ over time. For example, a node may change the extent of the FTP to achieve a given minimum confidence of the estimated surplus profile. If the FTP may differ over time, an indication of the extent of the FTP may be included in FD.

Reverting to the procedure 400 in FIG. 4A, step 401 may comprise a step 401A of estimating a first time profile of energy to be consumed by the node during the FTP, and a step 401B of estimating a second time profile representing energy to be generated by the EH device 13 in the node during the FTP. The surplus profile is then determined as a function of the first and second time profiles, for example as a (weighted) difference between the first and second profiles. The first time profile may account for energy used for processing and data transmission during the FTP. This energy may be given by a time schedule stored in the node. The processing may include both default task(s) for the node and any off-loaded task(s) that the node has accepted. The second time profile may account for any predictable condition that affects the amount of energy that will be harvested by the EH device 13. This condition depends on the type of EH device 13 and the location of the EH device 13. For example, availability of solar energy may depend on the location of the sun and may thus change over the course of day. Weather conditions may also affect the availability of solar energy. Artificial light may be available only during office hours. The availability of wind energy depends on the weather conditions. The availability of thermal energy, kinetic energy and radio wave energy may also be predictable in a specific environment. In some embodiments, step 401B comprises estimating the second time profile by forecasting the ambient energy that is available for harvesting by the EH device 13 over time during the FTP. The forecasting in step 401B may be based on a predefined relation between the available ambient energy and the time of day. In some embodiments, the forecasting in step 401B is based on historic data of harvested energy by the node. Optionally, the forecasting in step 401B also accounts for weather changes, for example based on a weather forecast, which may be provided to the node by the computer device 30.

If the node comprises an energy storage device 14, step 401 may comprise a step 401C of determining the amount of stored energy in the energy storage device 14 at the start of the FTP. The surplus profile is then given as a function of the amount of stored energy, in addition to the first and second time profiles. For example, the amount of stored energy may be added as a base level of energy to the (weighted) difference between the first and second profiles. The amount of stored energy may be determined based on a measurement of the actual energy content in the energy storage device 14. Optionally, if the start of the FTP is at a future time point, the amount of stored energy at this future time point may be predicted.

The skilled person understands that steps 401A-401C are equally applicable for estimation of a single aggregated value of surplus energy for the FTP.

As shown in FIG. 4A, the procedure 400 may include a step 402 of performing a curve fitting to the surplus profile from step 401. The curve fitting is performed to achieve a compact representation of the surplus profile. The compact representation is included in FD instead of the sequence of energy values of the surplus profile. This will reduce the amount data transferred in the network and reduce the risk for congestion. The curve fitting involves fitting one or more curves to the surplus profile and determining a set of curve coefficients for the fitted curve(s). Curve fitting as such is well-known to the skilled person. The set of curve coefficients forms a compact representation of the surplus profile and is included in FD as transmitted in step 403, thereby enabling the respective receiving node 10 to reconstruct the surplus profile. Any type of parametric curve may be used in step 402, including but not limited to Bézier curves, polynomial curves, lines, B-splines, NURBS (nonuniform rational B-splines), arcs, etc. Plural curves may be connected to form a composite curve.

An example of the curve fitting is shown in FIG. 5B. Here, a Bézier curve 501 is fitted to the surplus profile 500. The Bézier curve is defined by discrete control points 502a-502f, as is well-known in the art. The curve 501 is represented by the coordinates of the control points 502a-502f in the energy-time space. The use of Bézier control points allows for simple and computationally efficient reconstruction of the surplus profile.

As understood from FIG. 3, the distribution procedure 400 may be repeated by the respective node, which thereby repeatedly distributes updated FD in the system. The estimated surplus energy in consecutive FDs may be given for overlapping or nonoverlapping FTPs. In some embodiments, the respective node repeats the procedure 400 at a fixed time interval and/or on request by another node or the computer device 30.

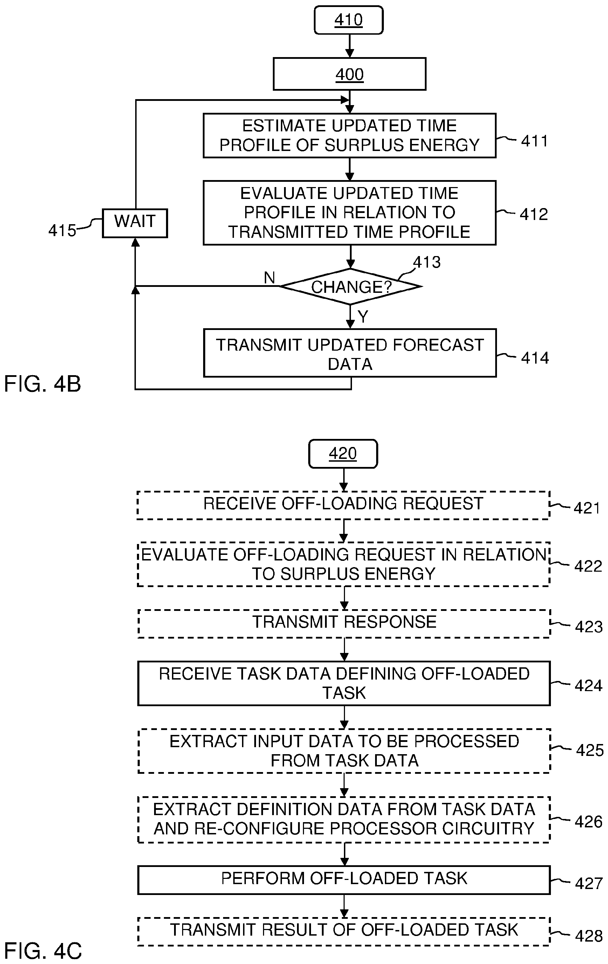

FIG. 4B shows an example distribution method 410, in which the updated FD is transmitted whenever there is a sufficient change in relation to the latest transmitted surplus profile. The method 410 thereby restricts the transmission of FD by the respective node, which results in energy savings and reduced data traffic in the system. After performing the procedure 400, the method 410 comprises a step 411 of estimating an updated surplus profile, i.e. a further time sequence of surplus energy for an FTP. An example of such an updated surplus profile 500' is shown in FIG. 5A in relation to the surplus profile 500 that was previously determined and transmitted by the procedure 400. The profiles 500, 500' are determined for a respective FTP, designated by 503 and 503'. As seen, 503 and 503' partially overlap. In step 412, the profile 500' is evaluated in relation to the profile 500, to quantify the difference between the profiles 500, 500'. The difference may be given by any aggregation of differences between corresponding energy values in the profiles 500, 500', for example sum or mean of absolute differences (SAD, MAD), sum of squares (SS), variance, etc. If a sufficient difference ("change") between the profiles 500, 500' is detected based on the evaluation in step 412, step 413 proceeds to step 414, in which updated FD is transmitted. The updated FD includes the updated surplus profile 500' or a corresponding set of curve coefficients, which are determined by analogy with step 402. A sufficient change may be detected when the difference between the profiles 500, 500' exceeds a threshold value. If a sufficient change is not detected, step 413 returns via a waiting step 415 to step 411. Step 415 thereby defines how often an updated surplus profile is estimated and evaluated for changes in relation to the latest transmitted surplus profile. In some embodiments, step 411 is repeated at a fixed time interval, which is set to a fraction of the FTP. Thereby, an updated surplus profile is repeatedly estimated during the FTP of the last transmitted surplus profile.

Although not shown in FIG. 4B, the method 420 may comprise a time-out step, which causes step 414 to be performed when a predefined time has elapsed since the last execution of step 414. Such a time-out step ensures that an updated surplus profile is made available to other nodes in the system by any node that does not detect a sufficient change by step 412 during the predefined time.

FIG. 4C is a flowchart of an example serving method 420, which may be performed by the respective node 10 in the system 1 of FIG. 1. The serving method 420 is performed by a node that has signaled, by transmission of FD, a forecasted availability of surplus energy. Optional steps are indicated by dashed lines. In the following, the node that performs the serving method 420 is denoted first node, and the node that is being served is denoted second node. Steps 421-422 correspond to step 308 in FIG. 3. In step 421, an offloading request, ORQ, is received by the first node via its transceiver 12 from the second node. In step 422, the ORQ is evaluated for acceptance or rejection. For example, the ORQ may indicate a required amount of energy, and the first node may accept the ORQ if the required amount of energy is smaller than the forecasted surplus energy in the first node. The forecasted surplus energy in the first node may be given by the latest surplus profile that has been estimated by the first node (cf. steps 401, 411). In some embodiments, the ORQ may include a specific time point when the off-loaded task needs to be performed and/or completed, and the first node may account for the specific time point when deciding if to accept or reject the request. In step 423, which corresponds to step 309 in FIG. 3, the first node transmits an offloading response, ORP, via the transceiver 12, to the second node. The ORP includes either an acceptance or a rejection. In step 424, assuming that the ORP included an acceptance, the first node receives task data, TD, via the transceiver 12. The TD defines one or more off-loaded tasks from the second node. Step 424 is included in step 312 in FIG. 3. The content of TD may differ depending on implementation. In some embodiments, TD may indicate a dedicated processing structure to be used for the off-loaded task, for example the processing part 100 in FIG. 2B or any of its modules. In such embodiments, if no modification of the processing structure is required nor any input data from the second node, the first node may perform the off-loaded task(s) in step 427 at any suitable time without further processing of TD. In some embodiments, an off-loaded task requires input data from the second node. In such embodiments, the first node extracts the input data from the TD in step 425. In the example of FIG. 2B, the input data may correspond to the sensor data, SD, which has been obtained by the second node from its sensor arrangement 15 and included in TD. On the other hand, if the off-loaded task is a sub-task, for example to be performed by modules 102 and 103 in the first node, the input data comprises an intermediate result generated by module 101 in the second node. In some embodiments, an off-loaded task requires modification ("re-configuration") of the processing structure in the first node. In such embodiments, the first node extracts definition data from TD in step 426. In the example of FIG. 2B, the definition data may include any one of DD1-DD4, depending on the processing module(s) to be modified. To perform the off-loaded task in step 427, the first node applies the definition data to re-configure the dedicated processing structure.

If may be noted that at least part of the task data, TD, may be received from the computer device 30 instead from the second node. For example, the second node may request the computer device 30 to transmit definition data to the first node, thereby simplifying the operation of the second node.

In step 428, which corresponds to step 313 in FIG. 3, the first node transmits the result of the off-loaded task, for example back to the second node. In the example that the result is an intermediate result from module 103 in the first node, the second node may then operate its module 104 on this intermediate result to generate the final result, RES. However, in some embodiments, the first node instead stores the result in internal memory for subsequent retrieval, for example by the computer device 30.

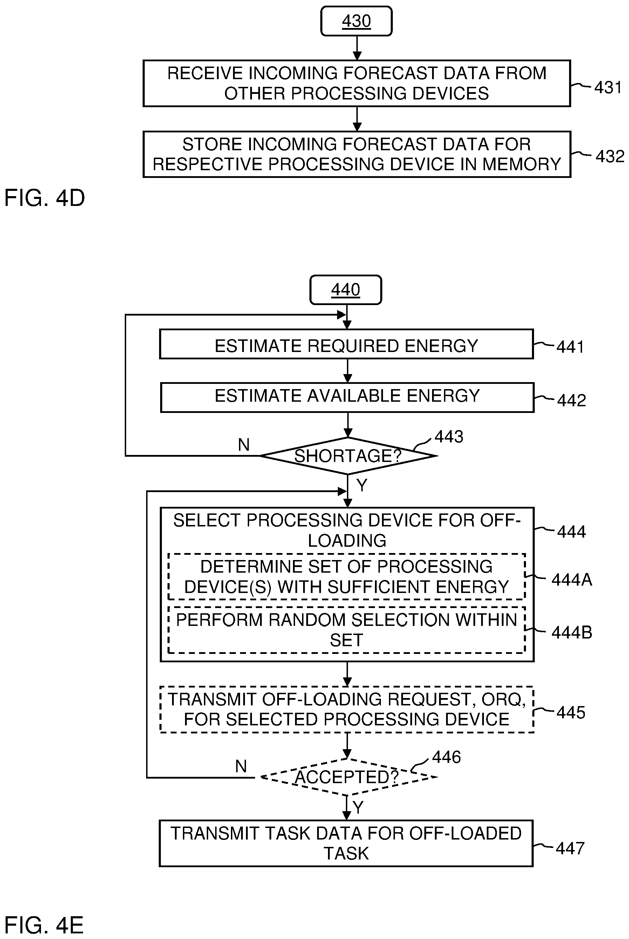

FIG. 4D is a flow chart of a data collection procedure 430, which may be performed by the respective node 10 in the system 1 of FIG. 1. The procedure 430 corresponds to step 305 in FIG. 3. In step 431, the node receives, via its receiver 12, incoming forecast data from one or more other nodes in the system. In step 432, the node stores the incoming forecast data in memory. The incoming forecast data includes an identifier of the originating node, i.e. the node that has generated the forecast data. In step 432, the incoming forecast data is stored in association with the identifier of the originating node. By the procedure 430, which is repeated when there is incoming forecast data, the respective node builds a database of forecast data for other nodes in the system. This database is then used in the off-loading method 440 in FIG. 4E.

FIG. 4E is a flow chart of an example off-loading method 440, which may be performed by the respective node 10 in the system 1 of FIG. 1. The off-loading method 440 corresponds to steps 306, 307, 310 and 311 in FIG. 3. Optional steps are indicated by dashed lines. Steps 441-443 are repeatedly performed by the node to detect an upcoming energy deficit ("shortage") in relation to scheduled tasks. The scheduled tasks may include both default task(s) for the node and any off-loaded task(s) that the node has accepted. In step 441, the node estimates the required energy for performing one or more upcoming tasks. Step 441 may be performed by analogy with step 401A. In step 442, the node estimates the available energy to perform the upcoming task(s). Step 442 may be performed by analogy with step 401B, optionally in combination with step 401C. In step 443, the required energy from step 441 is compared to the available energy from step 442 for detection of a shortage of energy. When a shortage is detected in step 443 in relation to an upcoming task, this task needs to be off-loaded and the method 440 proceeds to step 444. In step 444, the node evaluates the incoming forecast data that has been stored in the database by the procedure 430 for selection of a node to perform the upcoming task ("selected node"). As indicated, step 444 may comprise a step 444A of determining a set of candidate nodes that have sufficient energy to perform the upcoming task. In step 444A, the node may compare the required energy from step 441 to the forecast data in the database. Any node that is forecasted to have a surplus energy in excess of the required energy may be allocated as a candidate node in step 444A. The selected node is then determined among the candidate nodes according to a predefined selection algorithm. In one example, the selection algorithm selects the candidate node that has the largest amount of surplus energy. However, this may lead to one and the same node being selected for off-loading by several nodes in the system. To avoid such selection collision, step 444 may comprise a step 444B in which the selection algorithm performs a random selection among the candidate nodes. In some embodiments, the random selection is uniform, by assigning identical probabilities of selection to all candidate nodes. In some embodiments, the random selection is weighted by the surplus energy of the respective candidate node. This means that the probability of selection differs among the candidate nodes in proportion to their surplus energy. A candidate node with larger surplus energy is (slightly) more likely to be selected than a candidate node with smaller surplus energy. Thereby, the risk for selection collision is mitigated while selection of a candidate node with more available energy is promoted.

In step 445, the node transmits an off-loading request, ORQ, to the selected node. The ORQ is thereby received and processed by the selected node in accordance with steps 421-422 in FIG. 4B. If an acceptance is received in step 446, the method 440 proceeds to prepare and transmit task data, TD, for the task to be off-loaded in step 447, whereby the task is off-loaded to the selected node. In a variant, as noted above, the node may request the computer device 30 to transmit at least part of TD to the selected node. If a rejection is received in step 446, the method 440 returns to step 444 to select another node, for example among the set of candidate nodes.

The selection process in step 444 is exemplified in FIGS 7A-7B. The node 10 that performs the selection process ("selecting node") is represented as a dotted square at the bottom of FIGS 7A-7B. The selection process is performed by the selecting node 10 in relation a first set 10' of other nodes in the system. The first set 10' may include all nodes in the system or a subset thereof. The selecting node 10 has estimated (step 441) the required energy to perform an upcoming task to 60 mWh and concluded that the available energy (step 442) is insufficient. By evaluating the forecast data in its database, the selecting node 10 determines (step 444A) a second set 10" of nodes ("candidate nodes") that have an estimated surplus energy in excess of 60 mWh, as shown in FIG. 7B. The selecting node may then apply a selection algorithm to determine a selected node, for example in accordance with step 444B.

The off-loading technique as described herein is applicable wherever network-connected nodes are deployed and configured to be powered by harvested energy.

One such field of deployment is smart farming. In one example use case, a farmer has decided to save natural resources and optimize the utilization of agriculture resources by setting up a sensor network with a plurality of wireless sensor devices ("nodes") to measure relevant parameters such as moisture, temperature, light, carbon dioxide, pH, etc. The goal of sensing such parameters may be to reduce irrigation, use less chemicals to defeat weeds, etc. By using wireless sensor devices, which are powered by energy harvesting, it is possible to deploy and maintain the sensors with minimum effort and monitor agriculture resources in near real-time. The farmer will place the sensor devices at the locations that are of most interest to the farmer. Thereby, the conditions for harvesting energy are likely to differ between the sensor devices. The sensor device may be configured to process the sensor data by time-series data analysis or edge AI to get more precise information. Such processing may be computationally demanding, in particular if DNN is applied. For example, a sensor device may be configured to measure moisture based on electric conductivity between two electrodes in the ground. The conductivity may be provided as a time series of conductivity values to a trained DNN model that outputs moisture level. If the available energy is not sufficient to run the DNN model, the sensor device may, by use of the off-loading technique described herein, off-load the DNN processing to another sensor device that contains the same DNN model by transferring the sensor data that is gathered. Non-limiting examples of tasks performed by the nodes include anomaly detection of moisture level, detection of sunlight exposure, detection of affliction such as malnourishment, pests, blight, disease, etc.

Another field of deployment is structural health monitoring, in which sensor devices ("nodes") are arranged to continuously monitor and assess a building's structural health by sensing subtle building vibrations. In one example use case, the sensor devices are deployed to monitor buildings in regions with high seismic risk for detection of remote tremors and subtle building vibrations. Such detection may be performed by use of accelerometers that detect how much a floor drifts out of alignment during a quake and by applying a machine learning-based model to assess the sensor data from the accelerometers. The sensor devices may be configured as cheap solar-powered smart sensors which are installed on different floors, both indoors and outdoors, of a building and facing different directions. Since the sensor devices have different placements, they will receive solar or artificial light during different times of the day. By use of the off-loading technique described herein, operability of all sensor devices at all times may be ensured even though the availability of energy varies significantly between sensor devices and over time. Non-limiting examples of tasks performed by the nodes include anomaly detection of floor drift, structural misalignment detection, etc.

A system of nodes, configured in accordance with one or more embodiments described herein, provide numerous technical advantages. One advantage is that the utilization of harvested energy within the system may be increased. Another advantage is that any node that is unable to harvest enough energy to perform a task may off-load the task to another node. A further advantage is that more nodes may be powered by energy harvesting, resulting in a deployment that is more sustainable and ecofriendly and easier to maintain. Further, the need to switch batteries may be reduced or obviated altogether, or batteries may even be omitted from the sensor devices. Another advantage is that by distributing surplus profiles among the nodes, the selection of a node to perform an off-loaded task may be made in an efficient way with little network traffic. Further, the distribution of curve coefficients reduces network traffic even further.

While the subject of the present disclosure has been described in connection with what is presently considered to be the most practical embodiments, it is to be understood that the subject of the present disclosure is not to be limited to the disclosed embodiments, but on the contrary, is intended to cover various modifications and equivalent arrangements included within the spirit and the scope of the appended claims.

Further, while operations are depicted in the drawings in a particular order, this should not be understood as requiring that such operations be performed in the particular order shown or in sequential order, or that all illustrated operations be performed, to achieve desirable results.

In the following, clauses are recited to summarize some aspects and embodiments as disclosed in the foregoing.
C1. A processing device in a system (1) of processing devices (10), wherein the processing device comprises: processor circuitry (11) configured to perform a processing task; a transceiver (12) for communication with at least a subset of the processing devices (10) in the system (1); and an energy harvesting device (13) configured to provide energy for the processor circuitry (11) and the transceiver (12), wherein the processor circuitry (11) is further configured to estimate surplus energy in the processing device (10) for an upcoming time period (FTP), and wherein the transceiver (12) is configured to transmit forecast data (FD) representing the surplus energy to said at least a subset of the processing devices (10) in the system (1).
C2. The processing device of C1, wherein the processor circuitry (11) is further configured to estimate a time profile (500) of the surplus energy for the upcoming time period (FTP), and wherein the time profile is represented in the forecast data (FD).
C3. The processing device of C2, wherein the processor circuitry (11) is configured to estimate a first time profile of energy to be used by the processing device during the upcoming time period (FTP), estimate a second time profile representing energy to be generated by the energy harvesting device (13) during the upcoming time period (FTP), and estimate the time profile (500) of surplus energy as a function of the first and second time profiles.
C4. The processing device of C3, wherein the respective processing device (10) comprises an energy storage device (14), wherein the processor circuitry (11) is configured to determine an amount of stored energy in the energy storage device (14) at start of the upcoming time period (FTP), and estimate the time profile (500) of surplus energy as a further function of the amount of stored energy.
C5. The processing device of C3 or C4, wherein the energy harvesting device (13) is configured to capture ambient energy, including at least one of wind energy, solar energy, thermal energy, kinetic energy, or radio waves, and wherein the processor circuitry (11) is configured to estimate the second time profile by forecasting an availability of the ambient energy over time during the upcoming time period (FTP).
C6. The processing device of any one of C2-C5, wherein the time profile (500) of surplus energy comprises a time sequence of energy values, and wherein the processor circuitry (11) is configured to determine a set of curve coefficients (502a-502f) that represent the time sequence of energy values by fitting one or more curves (501) to the time sequence of energy values, and to include the set of curve coefficients (502a-502f) in the forecast data (FD) instead of the time sequence of energy values.
C7. The processing device of any one of C2-C6, wherein the processor circuitry (11) is configured to estimate, at a subsequent time point within the upcoming time period (FTP), a further time profile (500') of surplus energy within the upcoming time period (FTP), perform an evaluation of the further time profile (500') in relation to the time profile (500), and selectively, based on said evaluation of the further time profile (500'), cause the transceiver (12) to transmit further forecast data representing the further time profile (500') to said at least a subset of the processing devices (10).
C8. The processing device of C7, wherein the processor circuitry (11) is configured to repeatedly estimate the further time profile (500') during the upcoming time period (FTP).
C9. The processing device of any preceding clause, wherein the processor circuitry (11) is configured to, upon receipt by the transceiver (12) of task data (TD) that defines an off-loaded processing task from another processing device (10) in the system (1), perform the off-loaded processing task.
C10. The processing device of C9, wherein the task data (TD) comprises input data (SD) to be processed in the off-loaded processing task.
C11. The processing device of C9 or C10, wherein the task data (TD) comprises definition data (DD1-DD4) for the processor circuitry (11), the processor circuitry (11) being re-configurable by use of the definition data (DD1-DD4) to perform the off-loaded processing task.
C12. The processing device of any one of C9-C11, wherein the transceiver (12) is configured to transmit a result (RES) of the off-loaded processing task as performed by the processor circuitry (11).
C13. The processing device of any preceding clause, wherein the processor circuitry (11) is configured to, upon receipt by the transceiver (12) of an incoming request (ORQ) for off-loading from said another processing device (10) in the system (1), perform an evaluation of the incoming request (ORQ) in relation to the surplus energy, and transmit a response (ORP) for said another processing device (10) based on the evaluation.
C14. The processing device of any preceding clause, wherein the processor circuitry (11) is configured to receive, via the transceiver (12), incoming forecast data (FD) representing surplus energy of other processing devices (10') in the system (1), store the incoming forecast data (FD) in a memory (11B) in association with identifiers of said other processing devices (10'), and upon detection of a shortage of energy in relation to the processing task, evaluate the incoming forecast data (FD) stored in the memory (11B) to select a processing device among said other processing devices (10'), and cause the transceiver (12) to transmit, for the selected processing device, an outgoing request (ORQ) for off-loading of the processing task.
C15. The processing device of C14, wherein the processor circuitry (11) is configured to estimate a required energy to perform the processing task, and evaluate the required energy for said detection of a shortage of energy for performing the processing task.
C16. The processing device of C15, wherein the processor circuitry (11) is configured to determine, based on the required energy and the incoming forecast data (FD) stored in the memory (11B), a set (10") of processing devices having sufficient surplus energy to perform the processing task, and perform a random selection among the set (10") of processing devices to determine the selected processing device.
C17. The processing device of C16, wherein the random selection is weighted by the surplus energy of each processing device in the set (10") of processing devices.
C18. The processing device of any one of C14-C17, wherein the processor circuitry (11) is configured to, upon receipt by the transceiver (12) of an acceptance from the selected processing device, transmit outgoing task data (TD) for the processing device, said outgoing task data (TD) defining the processing task.
C19. The processing device of any preceding clause, wherein the processor circuitry (11) comprises one or more machine learning-based models (100) configured to perform the processing task.
C20. The processing device of any preceding clause, further comprising a sensor arrangement (15), which is configured to generate input data (SD) for the processing task.
C21. A method of operating processing devices configured for data communication in a network, wherein a respective processing device among the processing devices is configured to perform a processing task and comprises an energy harvesting device configured to provide energy for operating the respective processing device, said method comprising: causing (302) the respective processing device to estimate surplus energy in the respective processing device for an upcoming time period; causing (303, 304) the respective processing device to transmit, within the network, outgoing forecast data representing the estimated surplus energy; causing (305) the respective processing device to receive incoming forecast data from other processing devices among the processing devices, said incoming forecast data representing estimated surplus energy in the other processing devices within a respective upcoming time period; causing (308) the respective processing device to store the incoming forecast data in a memory in association with said other processing devices; causing (306) the respective processing device, upon detection of a shortage of energy to perform the processing task, evaluate the incoming forecast data stored in the memory for selection of one processing device among said other processing devices; and causing (307) the respective processing device to transmit, for said one processing device, an outgoing request for off-loading of the processing task.
C22. A computer-readable medium comprising computer instructions which, when executed by processor circuitry (11) in a respective processing device (10), cause the processor circuitry (11) in the respective processing device (10) to perform the method of C21.

## Claims

1. A processing device in a system (1) of processing devices (10), wherein the processing device comprises:
processor circuitry (11) configured to perform a processing task,
a transceiver (12) for communication with at least a subset of the processing devices (10) in the system (1), and
an energy harvesting device (13) configured to provide energy for the processor circuitry (11) and the transceiver (12),
wherein the processor circuitry (11) is further configured to estimate surplus energy in the processing device (10) for an upcoming time period (FTP), and
wherein the transceiver (12) is configured to transmit forecast data (FD) representing the surplus energy to said at least a subset of the processing devices (10) in the system (1).

2. The processing device of claim 1, wherein the processor circuitry (11) is further configured to estimate a time profile (500) of the surplus energy for the upcoming time period (FTP), and wherein the time profile is represented in the forecast data (FD).

3. The processing device of claim 2, wherein the processor circuitry (11) is configured to estimate a first time profile of energy to be used by the processing device during the upcoming time period (FTP), estimate a second time profile representing energy to be generated by the energy harvesting device (13) during the upcoming time period (FTP), and estimate the time profile (500) of surplus energy as a function of the first and second time profiles.

4. The processing device of claim 3, wherein the respective processing device (10) comprises an energy storage device (14), wherein the processor circuitry (11) is configured to determine an amount of stored energy in the energy storage device (14) at start of the upcoming time period (FTP), and estimate the time profile (500) of surplus energy as a further function of the amount of stored energy.

5. The processing device of claim 3 or 4, wherein the energy harvesting device (13) is configured to capture ambient energy, including at least one of wind energy, solar energy, thermal energy, kinetic energy, or radio waves, and wherein the processor circuitry (11) is configured to estimate the second time profile by forecasting an availability of the ambient energy over time during the upcoming time period (FTP).

6. The processing device of any one of claims 2-5, wherein the time profile (500) of surplus energy comprises a time sequence of energy values, and wherein the processor circuitry (11) is configured to determine a set of curve coefficients (502a-502f) that represent the time sequence of energy values by fitting one or more curves (501) to the time sequence of energy values, and to include the set of curve coefficients (502a-502f) in the forecast data (FD) instead of the time sequence of energy values.

7. The processing device of any one of claims 2-6, wherein the processor circuitry (11) is configured to estimate, at a subsequent time point within the upcoming time period (FTP), a further time profile (500') of surplus energy within the upcoming time period (FTP), perform an evaluation of the further time profile (500') in relation to the time profile (500), and selectively, based on said evaluation of the further time profile (500'), cause the transceiver (12) to transmit further forecast data representing the further time profile (500') to said at least a subset of the processing devices (10).

8. The processing device of any preceding claim, wherein the processor circuitry (11) is configured to, upon receipt by the transceiver (12) of task data (TD) that defines an off-loaded processing task from another processing device (10) in the system (1), perform the off-loaded processing task.

9. The processing device of claim 8, wherein the task data (TD) comprises input data (SD) to be processed in the off-loaded processing task and/or definition data (DD1-DD4) for the processor circuitry (11), the processor circuitry (11) being re-configurable by use of the definition data (DD1-DD4) to perform the off-loaded processing task.

10. The processing device of any preceding claim, wherein the processor circuitry (11) is configured to, upon receipt by the transceiver (12) of an incoming request (ORQ) for off-loading from said another processing device (10) in the system (1), perform an evaluation of the incoming request (ORQ) in relation to the surplus energy, and transmit a response (ORP) for said another processing device (10) based on the evaluation.

11. The processing device of any preceding claim, wherein the processor circuitry (11) is configured to receive, via the transceiver (12), incoming forecast data (FD) representing surplus energy of other processing devices (10') in the system (1), store the incoming forecast data (FD) in a memory (11B) in association with identifiers of said other processing devices (10'), and upon detection of a shortage of energy in relation to the processing task, evaluate the incoming forecast data (FD) stored in the memory (11B) to select a processing device among said other processing devices (10'), and cause the transceiver (12) to transmit, for the selected processing device, an outgoing request (ORQ) for off-loading of the processing task.

12. The processing device of claim 11, wherein the processor circuitry (11) is configured to estimate a required energy to perform the processing task, and evaluate the required energy for said detection of a shortage of energy for performing the processing task.

13. The processing device of claim 12, wherein the processor circuitry (11) is further configured to determine, based on the required energy and the incoming forecast data (FD) stored in the memory (11B), a set (10") of processing devices having sufficient surplus energy to perform the processing task, and perform a random selection among the set (10") of processing devices to determine the selected processing device.

14. A method of operating processing devices configured for data communication in a network, wherein a respective processing device among the processing devices is configured to perform a processing task and comprises an energy harvesting device configured to provide energy for operating the respective processing device, said method comprising:
causing (302) the respective processing device to estimate surplus energy in the respective processing device for an upcoming time period,
causing (303, 304) the respective processing device to transmit, within the network, outgoing forecast data representing the estimated surplus energy,
causing (305) the respective processing device to receive incoming forecast data from other processing devices among the processing devices, said incoming forecast data representing estimated surplus energy in the other processing devices within a respective upcoming time period,
causing (308) the respective processing device to store the incoming forecast data in a memory in association with said other processing devices,
causing (306) the respective processing device, upon detection of a shortage of energy to perform the processing task, evaluate the incoming forecast data stored in the memory for selection of one processing device among said other processing devices, and
causing (307) the respective processing device to transmit, for said one processing device, an outgoing request for off-loading of the processing task.

15. A computer-readable medium comprising computer instructions which, when executed by processor circuitry (11) in a respective processing device (10), cause the processor circuitry (11) in the respective processing device (10) to perform the method of claim 14.
